# EUROPEAN PATENT SPECIFICATION

(11) **EP 3 517 634 B1**
(45) Date of publication and mention of the grant of the patent: **10.08.2022**
(21) Application number: 17851057.4
(22) Date of filing: 14.06.2017
(51) Int. Cl.: C21C 7/072, C21C 7/00, C21C 5/34, B22D 1/00, F27D 3/16

(54) **MULTI-STAGE POROUS PLUG**
MEHRSTUFIGER PORÖSER STOPFEN
BOUCHON POREUX À PLUSIEURS ÉTAGES

(30) Priority: 19.09.2016 KR 20160119479
(43) Date of publication of application: 31.07.2019
(73) Proprietor: Korea Refractories Co., Ltd., Dangjin-si, Chungcheongnam-do 31709 (KR)
(72) Inventor: JANG, Moon-Jin, Dangjin-si Chungcheongnam-do 31733 (KR); CHA, Hyun-Min, Dangjin-si Chungcheongnam-do 31771 (KR)
(74) Representative: Lermer, Christoph
(86) International application number: PCT/KR2017/006203
(87) International publication number: WO 2018/052180

(56) References cited:
- EP-A1- 0 855 237
- DE-A1-102014 015 325
- JP-A- H1 171 609
- JP-A- 2009 046 756
- JP-A- 2010 242 191
- KR-A- 20100 127 329
- KR-A- 20140 123 074
- US-A- 5 202 079

## Description

### [Technical Field]

The present invention relates to a multi-layered porous plug, and more particularly to a multi-layered porous plug which overcomes variation in physical properties between the top and bottom of the porous plug product and limitations on the length of the product by comprising a multi-layered porous part configured to inject gas into molten steel in contact with the molten steel. The multi-layered porous part comprises multiple porous parts having different sizes and sectional shapes, and thus whether the porous part remains can be easily checked under high-temperature conditions, the effects of reducing workload and the production cost due to increased service life are obtained, the life expectancy of the porous part can be predicted, and whether the porous part safely remains can be easily determined, thus increasing operational stability. The present invention is defined in claim 1.

### [Background Art]

In a steelmaking process, a second refining operation is carried out to produce clean steel and increase metallurgical effects. To this end, a porous plug is placed at the bottom of a ladle, and a blowing operation of blowing an inert gas (Ar, N₂, etc.) through the porous plug is performed.

When an inert gas is blown through this porous plug and sprayed onto the bottom of the ladle, the temperature of molten steel in the ladle becomes by convection of the molten steel, the components of the molten steel become uniform, and the molten steel is degassed while non-metallic inclusions in the molten steel float, thus achieving metallurgical effects.

In recent years, for the production of highly clean steel, the metallurgical effects as described above have been increasingly important, and the service life and operational safety of the porous plug have been required.

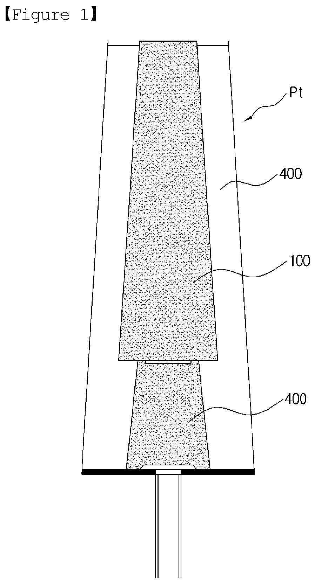

As shown in FIG. 1, a conventional porous plug (Pt) comprises: a porous part 100; an indicator part 300 provided under the porous part 100 and configured to check whether the porous part 100 remains; and a sleeve part 400 configured to surround and protect the indicator part 300.

As conditions that are always required for the service life and operational safety of the porous plug having the above-described configuration, it is a major challenge to overcome limitations (variation in the physical properties of the porous plug product and the length that can be produced using a molding press) on the length of the porous plug during production according to production characteristics and to design the porous plug such that whether the porous plug remains can be easily checked by the indicator.

Conventional arts related to porous plugs include Korean Patent No. 10-0396090 (August 18, 2003; entitled "Porous plug for ladle") (hereinafter referred to as conventional art).

However, the porous plug according to the conventional art has problems in that the above-described limitations on the length of the porous plug during production and it is difficult for the indicator to check whether the porous plug remains.

US 5 202 079 A discloses a gas purging or injecting device employed for introducing a gas into a metallurgical vessel containing molten metal.

DE 10 2014 015325 A1 relates to a sink for a vessel for holding molten metal, comprising a conical refractory sink, surrounding a sink core, the sink comprising a gas supply system directing gas from a cold side end to a hot side end through a channel in the sink core.

### [Disclosure]

### [Technical Problem]

The present invention has been made in order to the above-described problems, and it is an object of the present invention to overcome variation in physical properties between the top and bottom of a porous plug product and limitations on the length of the product by providing a multilayered porous part configured to inject gas into molten steel in contact with the molten steel as set forth in claim 1.

Another object of the present invention is to make it possible to easily check whether a porous part remains, under high-temperature conditions, predict the life expectancy of the porous part, and easily check whether the porous part safely remains, by providing a multi-layered porous part comprising multiple porous layers having different sizes and sectional shapes.

Still another object of the present invention is to overcome limitations on the length of a porous part by connecting multiple porous layers and provide the effects of reducing workload and the production cost due to increased life expectancy.

### [Technical Solution]

To achieve the above objects, the present invention provides a multi-layered porous plug comprising: an upper porous part having a plurality of pores formed therein; a lower porous part having a plurality of pores formed therein, and provided under the upper porous part; a porous indicator part having a plurality of pores formed therein, and provided under the lower porous part, and having a sectional shape different from that of the lower porous part; and a sleeve part configured to surround the upper porous part, the lower porous part and the indicator part.

Furthermore, the bottom width of the upper porous part may be larger than the top width of the lower porous part.

In addition, the upper porous part may have a first sectional shape, and the lower porous part may have a second sectional shape different from the first sectional shape.

Moreover, the length of each of the upper porous part and the lower porous part is preferably 100 mm to 250 mm.

### [Advantageous Effects]

The present invention having the above-described configuration and features can overcome variation in the physical properties between the top and bottom of the multilayered plug product and limitations on the length of the product by comprising the multilayered porous part. Furthermore, overcoming of limitations on the length can increase the life expectancy of the product, thus reducing workload and the production cost. In addition, since the multilayered porous part is composed of multiple porous layers having different sizes and sectional shapes, whether the porous part remains can be easily checked under high-temperature conditions, the life expectancy of the porous part can be predicted, and whether the porous part safely remains can be easily determined.

### [Description of Drawings]

FIG. 1 illustrates a conventional porous plug.
FIG. 2 illustrates a state in which a porous plug according to the present invention is used.
FIG. 3 illustrates the structure of a porous plug according to the present invention.
FIG. 4 is a table summarizing variation in the physical properties of a porous part.
FIG. 5 illustrates the detailed structure of a porous plug according to the present invention.

### [Mode for Invention]

The present invention may be variously modified and may have several exemplary embodiments, and thus aspects (or exemplary embodiments) will be described in detail herein. It is to be understood, however, that the present invention is not intended to be limited to the particular forms disclosed, but is intended to cover all modifications, equivalents and alternatives, which are within the scope of the invention. In the drawings, like reference numerals, particularly reference numerals having the same last two digits or the same last two digits and alphabets, designate elements having the same or similar functions. Unless otherwise specifically stated, the element designated by each reference numeral in the drawings may be considered an element corresponding to these standards.

In addition, the size or thickness of each element shown in the drawings is exaggerated (larger or smaller) or schematically illustrated for convenience of understanding, but the scope of the present invention is not construed to be limited thereto.

Terms used herein are merely to explain particular aspects (or embodiments) and are not intended to limit the present invention. Singular expressions include plural expressions unless specified otherwise in the context thereof. As used herein, the terms "comprise", "comprising", etc., are intended to denote the existence of stated features, numbers, steps, operations, components, parts, or combinations thereof, but do not exclude the probability of existence or addition of one or more other features, numbers, steps, operations, components, parts, or combinations thereof.

Unless otherwise defined, all terms used herein, including technical or scientific terms, have the same meanings as commonly understood by those skilled in the technical field to which the present invention pertains. Terms, such as those defined in commonly used dictionaries, should be interpreted in an idealized or overly formal sense unless expressly so defined herein.

As used herein, the terms "first", "second", etc., are used merely used to distinguish one component from other component. These terms are not limited to the order in which they are made, and their names may not be consistent between the detailed description of the invention and the claims.

The present invention is directed to a multi-layered porous plug which overcomes variation in physical properties between the top and bottom of the porous plug product and limitations on the length of the product by comprising a multilayered porous part configured to inject gas into molten steel in contact with the molten steel. The porous part comprises multiple porous layers having different sizes and sectional shapes, and thus whether the porous part remains can be easily checked under high-temperature conditions, the effects of reducing workload and the production cost due to increased service life are obtained, the life expectancy of the porous part can be predicted, and whether the porous part safely remains can be easily determined, thus increasing operational stability.

Hereinafter, the multi-layered porous plug according to the present invention (hereinafter also referred to as the present porous plug (P) will be described in detail with reference to the accompanying drawings.

Before describing the present invention, terms that can be interpreted differently according to the standard will be defined as follows. Specifically, 'the length of the porous part' means the vertical direction length of the porous part, and 'the horizontal direction width of the porous part' means the horizontal width of the porous part. The vertical and horizontal directions specified herein are based on FIGS. 1 to 4, and will also be applied to the claims unless otherwise indicated.

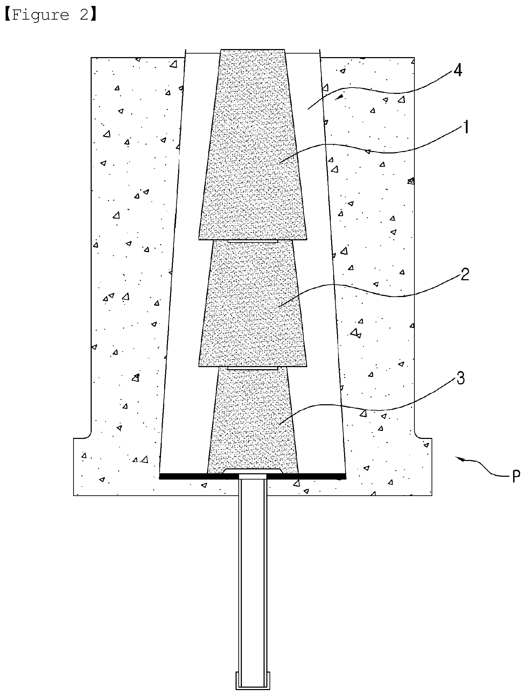

FIG. 2 illustrates a state in which the porous plug of the present invention is used. Specifically, it shows the ladle's bottom in which the present porous plug (P) is placed.

The term "porous plug" refers to a device that is placed at the bottom of a ladle so as to be able to blow inert gas (Ar, N₂, etc.) to separate oxides and enhance the mixing of molten steel, during a second refining operation for producing clean steel and enhancing metallurgical effects in steelmaking processes.

It is important to design this porous plug so as to overcome limitations (variation in the physical properties of the product and the length that can be produced using a molding press) on the length of the porous plug during production and allow an indicator to easily check whether the porous plug remains. However, the conventional porous plug (Pt) as shown in FIG. 1 has a problem in that it is difficult to check whether the porous plug remains, because the limit of the length of the porous plug is not clear and the indicator part 3 is melted out.

To overcome this problem, the present invention is intended to provide a porous plug comprising a porous part having a multilayer structure.

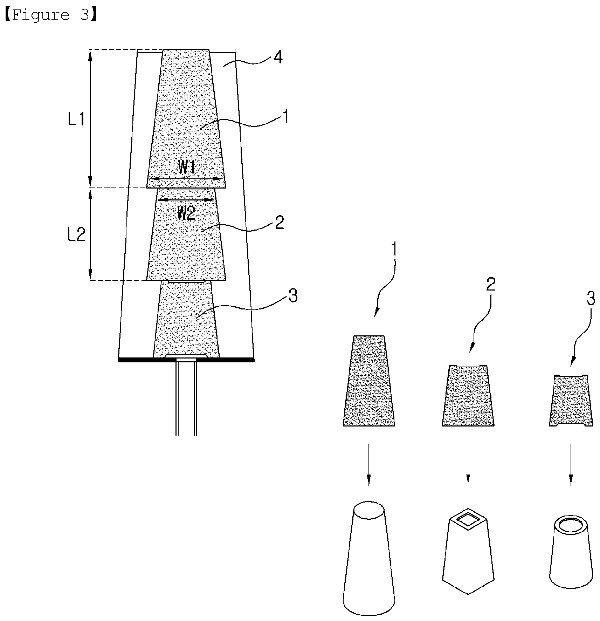

FIG. 3 illustrates the structure of the porous plug of the present invention.

As shown in FIG. 3, the present porous plug (P) comprises an upper porous part 1, a lower porous part 2, an indicator part 3, and a sleeve part 4.

Each component will now be described. First, the upper porous part 1 is made of a porous material having a plurality of pores formed therein, and is configured to blow an inert gas (such as argon (Ar), nitrogen (N₂) or the like), injected from the underlying pipe, into molten steel.

The lower porous part 2 provided under the upper porous part 1 has a structure similar to that of the upper porous part 1, and is also made of a porous material having a plurality of pores formed therein. The inert gas injected from the underlying pipe passes through the lower porous part 2 to the upper porous part 1.

The indicator part 3 provided under the lower porous part 2 is also made of a porous material having a plurality of pores formed therein. This indicator part 3 has a sectional shape different from that of the porous part, particularly the lower porous part 2, so that whether the porous part remains can be checked under high-temperature conditions (at a position above the upper porous part 1).

The sleeve part 4 is configured to surround the upper porous part 1, the lower porous part 2 and the indicator part 3, and seals and protects the side of each of the upper porous part 1, the lower porous part 2 and the indicator part 3.

The porous plug of the present invention, which has the above-described configuration and features, provides the effect of overcoming variation in physical properties between the upper and lower portions of the porous part, because the porous part has a multilayer structure.

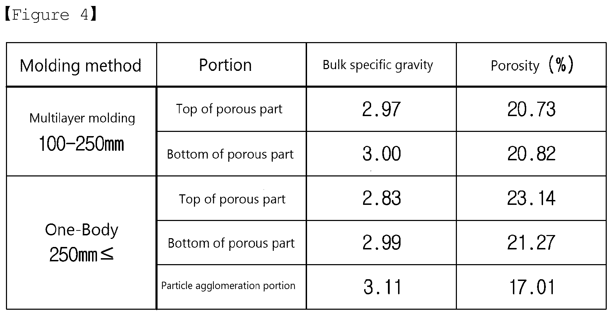

FIG. 4 summarizes this variation in physical properties. As shown therein, the conventional porous plug (Pt) has variations 0.1 and 2% in specific gravity and porosity, respectively, between the top and bottom of the porous plug, indicating that blowing is non-uniform between different portions of the porous plug. However, it can be seen that the present porous plug (P) having a multilayer structure has little or no variation in specific gravity and porosity between the top and bottom thereof.

In addition, in the conventional porous plug (Pt), a large amount of eccentric particles are observed in the porous part, and the difference in specific gravity between the eccentric portion and the non-eccentric portion is +0.2, and the difference in porosity is at most -6%, indicating that blowing through the porous plug is non-uniform.

In addition, the porous plug of the present invention, which has the above-described configuration and features, provides the effect of overcoming limitations on the length of the porous part.

Specifically, in the case of the conventional porous plug (Pt), there are limitations on the length of the porous part 100, which can be produced by a molding press, and hence the length of the porous part 100 cannot be increased indefinitely and an increase in the length of the porous part 100 also leads to an increase in the production cost of the molding press. For these reasons, the length of the porous part 100 is necessarily limited.

In addition, if the porous part 100 is produced to have a length of 250 mm or more, bending of the porous part 100 will occur due to a load and other reasons, and hence the conventional porous plug (Pt) is difficult to have a length of 250 mm or more.

However, since the present porous plug (P) comprises the porous part having a multilayer structure, it can overcome the above-described length limitations by increasing the number of the porous parts.

In addition, the porous plug of the present invention, which has the above-described configuration and features, makes it possible to increase the service life of the porous plug by increasing the total length of the porous plug, and this increase in the service life exhibits the effects of reducing workload and reducing the production cost.

As another characteristic of the present invention, as shown in FIG. 3, the present porous plug (P) is characterized in that the bottom width (W1) of the upper porous part 1 is larger than the top width (W2) of the lower porous part 2.

Due to this characteristic, the present invention makes it possible to easily check whether the porous part remains, under high-temperature conditions, and determine the level of abrasion of the porous part during use in a stepwise manner, thus facilitating a ladle operation.

In addition, since whether the porous part remains is easily checked under high-temperature conditions, it is easy to predict the life expectancy of the product, and checking whether the porous part remains is reliably achieved, thus greatly increasing operational stability.

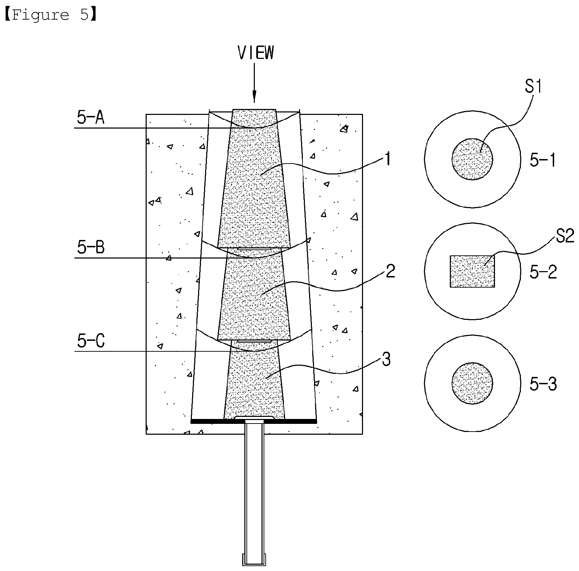

FIG. 5 is a view showing another structure of the porous plug of the present invention, and also shows the sectional shape of each of the upper porous part 1, the lower porous part and the indicator part 3.

As still another characteristic of the present invention, as shown in FIG. 5, the present porous plug P is characterized in that the upper porous part 1 has a first sectional shape (S1) and the lower porous part 2 has a second sectional shape (S2) different from the first sectional shape (S1).

FIG. 5 shows an embodiment in which the first sectional shape (S1) of the upper porous part 1 is circular and the second sectional shape (S2) of the lower porous part is rectangular.

In addition, FIG. 5 also shows an embodiment in which the indicator part 3 has a circular sectional shape different from the rectangular sectional shape that is the second sectional shape (S2) of the lower porous part 2.

Due to the characteristic that the upper porous part has a sectional shape different from that of the lower porous part 2 as described above, the present invention makes it possible to check whether the porous part remains, like 'the above-mentioned characteristic of the width of the upper porous part 1 and the lower porous part 2'.

Referring to FIG. 5, for example, if the porous part (upper porous part 1) is melted out up to a point indicated by 5-A, the sectional shape of the porous part under high-temperature conditions will be observed to be circular as shown in FIG. 5-1, and if the porous part (upper porous part 1) is melted out up to a point indicated by 5-B, the sectional shape of the porous part under high-temperature conditions will be observed to be rectangular as shown in FIG. 5-2, and if the porous part (lower porous part 2) is melted out up to a point indicated by 5-C, the sectional shape of the porous part under high-temperature conditions will be observed to be circular as shown in FIG. 5-3.

Therefore, the operator can easily check whether the porous part remains in a stepwise manner, by observing the sectional shape of the porous part under high-temperature conditions.

Meanwhile, the present porous plug (P) is characterized in that the length (L1) of the upper porous part 1 and the length (L2) of the lower porous part 2 are each in the range of 100 mm to 250 mm.

If a porous part is produced to have a length of 250 mm or more, bending of the porous part will occur due to a load and other reasons. However, the present invention can overcome limitation on the length by constructing porous parts having a length of 250 mm or less and connecting them to each other to provide a multilayer structure.

In addition, if the length (L1) or (L2) of the porous part is shorter than 100 mm, which is the lower limit of the above-described range, the porous part cannot perform its function due to its excessively short length, and particularly, will need to be frequently replaced due to its short service life, undesirably resulting in an increase in workload and an increase in the production cost.

Although the foregoing has described the embodiment in which the porous part having the two-layer structure consisting of the upper porous part 1 and the lower porous part 2, this is for convenience of explanation only, and this limitation is not intended to exclude a porous part comprising three layers, four layers or more. All forms of multilayer porous parts should be construed as falling within the scope of the present invention.

In addition, those skilled in the art will appreciate that the present invention described above with reference to the accompanying drawings may be changed and modified in various manners and these changes and modifications should be construed as falling within the scope of the present invention.

## Claims

1. A multi-layered porous plug(P) comprising:
an upper porous part (1) having a plurality of pores formed therein and is configured to blow an inert gas comprising argon (Ar) or nitrogen (N) injected into molten steel;
a lower porous part (2) having a plurality of pores formed therein, and provided under the upper porous part (1), and make the inert gas pass through to the upper porous part (1) ;
a porous indicator part 3 having a plurality of pores formed therein, and provided under the lower porous part 2, and having a sectional shape different from that of the lower porous part (2) so that whether the porous part remains can be checked at a position above the upper porous part (1); and
a sleeve part (4) configured to surround the upper porous (1) part, the lower porous part (2) and the porous indicator part (3);
wherein a bottom width (W1) of the upper porous part (1) is larger than a top width (W2) of the lower porous part (2),
wherein the upper porous part (1) has a first sectional shape (S1), and the lower porous part (2) has a second sectional (S2) shape different from the first sectional shape (S1),
wherein a length (L1,L2) of each of the upper porous part 1 and the lower porous part (2) is 100 mm to 250 mm,
wherein the sectional shape (S1) of the upper porous part (1) is circle, and the sectional shape (S2) of the lower porous (2) part is rectangular, and the sectional shape of the porous indicator part (3) is circle,
wherein the lower porous part (2) further comprising a first concave part provided upper side and a first stepped part provide on the outer portion of the first concave part,
wherein the porous indicator part further comprising a second concave part provided upper side and a second stepped part provide on the outer portion of the second concave part,
wherein the porous indicator part (3) further comprising a third concave part provided center of lower side and a third stepped part provide on the outer portion of the third concave part,
wherein the upper porous part (1), the lower porous part (2), the porous indicator and the sleeve portion has a structure in which width increases toward the bottom,
wherein the vertical length (L1) of the upper porous part 1 is longer than the vertical length (L2) of the lower porous part (2), and the vertical length (L2) of the lower porous part 2 is longer than the vertical length of the porous indicator part (3) .

## Patentansprüche

1. nspruch 1] Mehrschichtiger poröser Stopfen (P), umfassend:
einen oberen porösen Teil (1) mit einer Vielzahl von darin ausgebildeten Poren, der so konfiguriert ist, dass er ein Inertgas bläst, das Argon (Ar) oder Stickstoff (N) umfasst, das in geschmolzenen Stahl injiziert wird;
ein unteres poröses Teil (2) mit einer Vielzahl von darin ausgebildeten Poren, das unter dem oberen porösen Teil (1) vorgesehen ist und das Inertgas zu dem oberen porösen Teil (1) durchlässt;
ein poröses Anzeigeteil (3) mit einer Vielzahl von darin ausgebildeten Poren, das unter dem unteren porösen Teil (2) vorgesehen ist und eine Querschnittsform aufweist, die sich von der des unteren porösen Teils (2) unterscheidet, so dass an einer Position oberhalb des oberen porösen Teils (1) überprüft werden kann, ob das poröse Teil verbleibt; und
einen Hülsenteil (4), der so gestaltet ist, dass er den oberen porösen Teil (1), den unteren porösen Teil (2) und den porösen Anzeigeteil (3) umgibt;
wobei eine untere Breite (W1) des oberen porösen Teils (1) größer ist als eine obere Breite (W2) des unteren porösen Teils (2),
wobei der obere poröse Teil (1) eine erste Querschnittsform (S1) hat und der untere poröse Teil (2) eine zweite Querschnittsform (S2) hat, die sich von der ersten Querschnittsform (S1) unterscheidet,
wobei eine Länge (L1, L2) des oberen porösen Teils (1) und des unteren porösen Teils (2) jeweils 100 mm bis 250 mm beträgt,
wobei die Querschnittsform (S1) des oberen porösen Teils (1) kreisförmig ist, und die Querschnittsform (S2) des unteren porösen Teils (2) rechteckig ist, und die Querschnittsform des porösen Anzeigeteils (3) kreisförmig ist,
wobei der untere poröse Teil (2) ferner einen ersten konkaven Teil, der auf der Oberseite vorgesehen ist, und einen ersten abgestuften Teil, der auf dem äußeren Abschnitt des ersten konkaven Teils vorgesehen ist, umfasst,
wobei das poröse Anzeigeteil ferner einen zweiten konkaven Teil, der an der Oberseite vorgesehen ist, und einen zweiten abgestuften Teil, der an dem äußeren Abschnitt des zweiten konkaven Teils vorgesehen ist, umfasst,
wobei das poröse Anzeigeteil (3) ferner ein drittes konkaves Teil, das in der Mitte der Unterseite vorgesehen ist, und ein drittes abgestuftes Teil, das auf dem äußeren Abschnitt des dritten konkaven Teils vorgesehen ist, umfasst,
wobei der obere poröse Teil (1), der untere poröse Teil (2), der poröse Indikator und der Hülsenabschnitt eine Struktur aufweisen, bei der die Breite zum Boden hin zunimmt,
wobei die vertikale Länge (L1) des oberen porösen Teils (1) länger ist als die vertikale Länge (L2) des unteren porösen Teils (2), und die vertikale Länge (L2) des unteren porösen Teils (2) länger ist als die vertikale Länge des porösen Anzeigeteils (3).

## Revendications

1. Bouchon poreux multicouche (P) comprenant :
une partie poreuse supérieure (1) présentant une pluralité de pores formés dans celle-ci et qui est configurée pour souffler un gaz inerte comprenant de l'argon (Ar) ou de l'azote (N) injecté dans de l'acier fondu ;
une partie poreuse inférieure (2) présentant une pluralité de pores formés dans celle-ci, et prévue sous la partie poreuse supérieure (1), et faisant passer le gaz inerte à travers la partie poreuse supérieure (1) ;
une partie indicatrice poreuse 3 présentant une pluralité de pores formés dans celle-ci, et prévue sous la partie poreuse inférieure 2, et présentant une forme en coupe différente de celle de la partie poreuse inférieure (2) de sorte qu'il puisse être vérifié si la partie poreuse reste à une position au-dessus de la partie poreuse supérieure (1); et
une partie de manchon (4) configurée pour entourer la partie poreuse supérieure (1), la partie poreuse inférieure (2) et la partie indicatrice poreuse (3) ;
dans lequel une largeur inférieure (W1) de la partie poreuse supérieure (1) est supérieure à une largeur supérieure (W2) de la partie poreuse inférieure (2),
dans lequel la partie poreuse supérieure (1) présente une première forme en coupe (S1), et la partie poreuse inférieure (2) a une deuxième forme en coupe (S2) différente de la première forme en coupe (S1),
dans lequel une longueur (L1, L2) de chacune de la partie poreuse supérieure 1 et de la partie poreuse inférieure (2) est de 100 mm à 250 mm,
dans lequel la forme en coupe (S1) de la partie poreuse supérieure (1) est un cercle, et la forme en coupe (S2) de la partie poreuse inférieure (2) est rectangulaire, et la forme en coupe de la partie indicatrice poreuse (3) est un cercle,
dans lequel la partie poreuse inférieure (2) comprenant en outre une première partie concave prévue sur le côté supérieur et une première partie étagée prévue sur la partie extérieure de la première partie concave,
dans lequel la partie indicatrice poreuse comprenant en outre une deuxième partie concave prévue sur le côté supérieur et une deuxième partie étagée prévue sur la partie extérieure de la deuxième partie concave,
dans lequel la partie indicatrice poreuse (3) comprenant en outre une troisième partie concave prévue au centre du côté inférieur et une troisième partie étagée prévue sur la partie extérieure de la troisième partie concave,
dans lequel la partie poreuse supérieure (1), la partie poreuse inférieure (2), l'indicateur poreux et la partie de manchon présentent une structure dans laquelle la largeur augmente vers le bas,
dans lequel la longueur verticale (L1) de la partie poreuse supérieure 1 est supérieure à la longueur verticale (L2) de la partie poreuse inférieure (2), et la longueur verticale (L2) de la partie poreuse inférieure 2 est supérieure à la longueur verticale de la partie indicatrice poreuse (3).
